**Europäisches Patentamt**

(19) **European Patent Office**

**Office européen des brevets**

(11) Numéro de publication: **0 041 411**
**B1**

(12) **FASCICULE DE BREVET EUROPEEN**

(45) Date de publication du fascicule du brevet:
**21.09.83**

(51) Int. Cl.³: **B 60 N 1/10**

(21) Numéro de dépôt: **81400636.7**

(22) Date de dépôt: **22.04.81**

(54) Siège transformable pour véhicule automobile avec assise relevable et dossier rabattable à mouvements simultanés.

(30) Priorité: **03.06.80 FR 8012269**

(43) Date de publication de la demande:
**09.12.81 Bulletin 81/49**

(45) Mention de la délivrance du brevet:
**21.09.83 Bulletin 83/38**

(84) Etats contractants désignés:
**BE DE GB IT NL SE**

(56) Documents cités:
**EP-A-0 004 484**
**FR-A-1 254 712**
**GB-A-194 939**
**US-A-2 926 948**
**US-A-3 695 688**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Llorente, Louis, 13, rue de Monchauvet,
F-78200 Mantes La Ville (FR)**

(74) Mandataire: **Ernst-Schonberg, Michel et al, RNUR -
S. 0804 B.P. 103, F-92109 Boulogne-Billancourt (FR)**

ACTORUM AG

Siège transformable pour véhicule automobile avec assise relevable et dossier rabattable à mouvements simultanés

L'invention concerne un siège transformable pour véhicule automobile avec assise relevable et dossier rabattable à mouvements simultanés, qui est utilisé dans le but d'augmenter le volume utile du compartiment à bagages.

Pour ce genre de siège, on utilise une barre de liaison articulée sur l'assise et sur le dossier dans le but d'assurer la simultanéité des mouvements desdits assise et dossier.

Selon un mode de réalisation connu par le brevet français 2 420 445, une biellette articulée par une extrémité sur le plancher du véhicule autour d'un axe transversal est reliée par son autre extrémité à un deuxième axe transversal fixé à l'assise, ce qui permet le relèvement de cette dernière tandis que la barre de liaison est articulée autour d'un axe transversal solidaire du dossier et un axe transversal solidaire de l'assise.

Lorsque, dans la position d'utilisation du siège, l'axe d'articulation de la barre de liaison sur l'assise se trouve au-dessous du plan défini par l'axe d'articulation de la biellette sur le plancher et par l'axe d'articulation de la barre de liaison sur le dossier, le mouvement de rabattement du dossier ne peut être communiqué à l'assise.

Réciproquement, le mouvement de remise en place du dossier n'est pas entièrement communiqué à l'assise, si bien que cette dernière ne peut pas revenir dans sa position initiale d'utilisation.

L'invention a pour objet un perfectionnement du siège ayant pour but de remédier aux inconvénients précités.

L'invention a également pour but d'autoriser la réalisation de sièges dont l'axe d'articulation sur l'assise de la barre de liaison est situé à un niveau très bas, de sorte que celle-ci ne puisse constituer une gêne quelconque nuisible au confort du siège.

L'invention s'applique donc à un siège transformable pour véhicule automobile comprenant une assise relevable vers le haut autour d'un premier axe transversal, un dossier rabattable vers l'avant autour d'un deuxième axe transversal fixe, une barre de liaison articulée sur l'assise et sur le dossier pour assurer la simultanéité des mouvements de ces deux élements, une biellette articulée à son extrémité sur le premier axe transversal et reliée par son autre extrémité à un troisième axe transversal fixé au plancher du véhicule.

Ce siège est caractérisé en ce que dans sa position d'utilisation normale, l'axe d'articulation de la barre de liaison sur l'assise se trouve en-dessous du plan contenant le troisième axe transversal fixé au plancher du véhicule et l'axe d'articulation de la barre de liaison sur le dossier, et qu'un moyen de guidage à rampe, solidaire du soubassement de l'assise, assure la translation d'un point de la barre de liaison dans le but de relever l'axe d'articulation de la barre de liaison sur l'assise au-dessus dudit plan au cours du mouvement de rabattement du dossier.

Dans le siège ainsi réalisé, on matérialise avantageusement le point de translation de la barre de liaison par un galet de roulement temporairement en contact avec une rampe de guidage rapportée sur le plancher du véhicule, qui porte aussi le logement de l'axe dudit galet.

On utilisera de préférence un système à deux barres de liaison respectivement disposées à proximité des extrémités latérales des armatures du dossier et de l'assise.

Un tel siège est donc particulièrement bien adapté aux différents profils de soubassements d'assise et de plancher et ne pose plus de problèmes particuliers d'utilisation quant aux possibilités d'obtenir un déploiement et un verrouillage correct de l'assise.

Un exemple de réalisation fait l'objet de la description qui suit en référence aux dessins joints dans lesquels:

– la figure 1 est une vue latérale du siège selon l'invention dans sa position normale d'utilisation;

– les figures 2 et 3 représentent le siège dans des positions intermédiaires;

– la figure 4 est une vue analogue après transformation complète du siège;

– la figure 5 est une vue de dessus de la barre de liaison munie de son galet de roulement et de son palier de fixation sur l'armature de l'assise;

– la figure 6 est une vue latérale de la rampe de guidage;

– la figure 7 est une vue de dessus de la rampe représentée à la figure 6.

On a représenté sur les figures un plancher 1 de véhicule automobile supportant un siège arrière constitué, principalement, par une assise 2 et un dossier 3.

L'assise 2 repose, vers sa partie arrière, sur le plancher 1. Elle porte, sous sa partie avant, une ferrure 4 articulée sur un premier axe transversal 5 porté par une extrémité d'une biellette 6 articulée sur un troisième axe transversal 7 porté par une chape 8 solidaire du plancher 1. On peut prévoir une ou deux biellettes disposées au voisinage de la partie médiane de l'assise ou bien deux biellettes placées chacune à une extrémité de cette assise.

Le dossier 3 est articulé, à sa base, autour d'un deuxième axe transversal 9 porté par une chape 10 solidaire du plancher 1. En position normale d'utilisation, ce dossier s'appuie, à sa partie supérieure, sur des butées 11 solidaires de la carrosserie, tout moyen conu approprié pouvant être utilisé pour verrouiller le dossier dans cette position.

De chaque côté du siège, il est prévu une barre de liaison 12 articulée en 13 sur l'assise et en 14 sur le dossier. La barre 12 est coudée en ayant sa concavité dirigée vers le haut, comme représenté sur les figures, pour rester au voisinage du plancher lorsque le siège est en position d'utilisation et pour ne constituer aucune gêne au point de vue du confort au niveau du capitonnage de l'assise.

L'arrière de l'assise 2 est engagé sur une longueur suffisante sous la base du dossier 3 de façon à éviter la formation d'un vide entre ces deux parties.

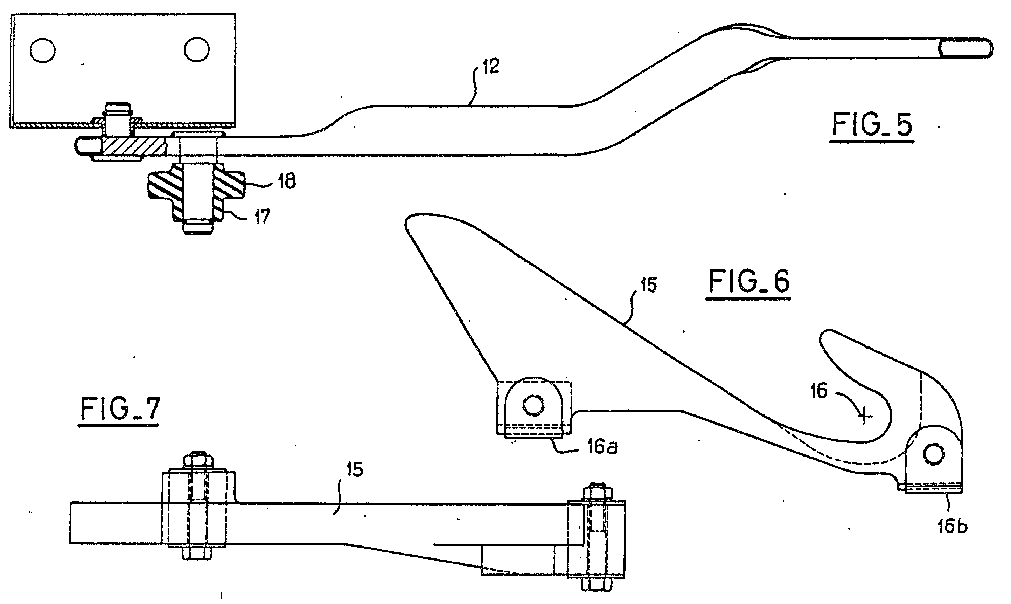

Dans le but de parfaire le verrouillage de l'assise 2 en position d'utilisation, lorsque l'axe d'articulation 13 de la barre de liaison sur l'assise 2 se trouve en-dessous du plan P contenant le troisième axe transversal 7 et l'axe d'articulation 14 de la barre de liaison sur le dossier, il est prévu, selon l'invention, un moyen de guidage à rampe 15, rapporté au moyen de ferrures 16a, 16b sur le plancher 1 ou sur le soubassement ou socle de l'assise 2. La rampe simple ou double 15 peut être prévue au voisinage de la partie médiane de l'assise ou placée de part et d'autre de l'armature de l'assise ainsi que cela vient d'être dit pour les barres de liaison 12. La rampe 15, inclinée vers l'arrière de l'assise 2, ainsi que cela est montré sur les figures 6 et 7, débouche dans un logement 16 qui reçoit l'axe ou le moyeu cylindrique 17 d'un galet de roulement 18. On notera que le logement 16 peut être fermé par un verrou à ressort qui empêche l'extraction accidentelle du moyeu 17.

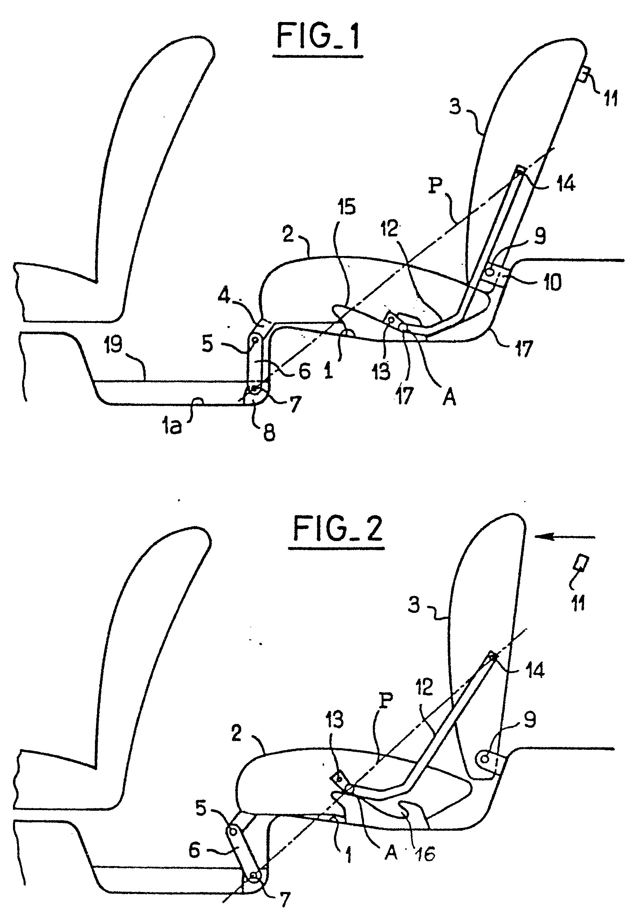

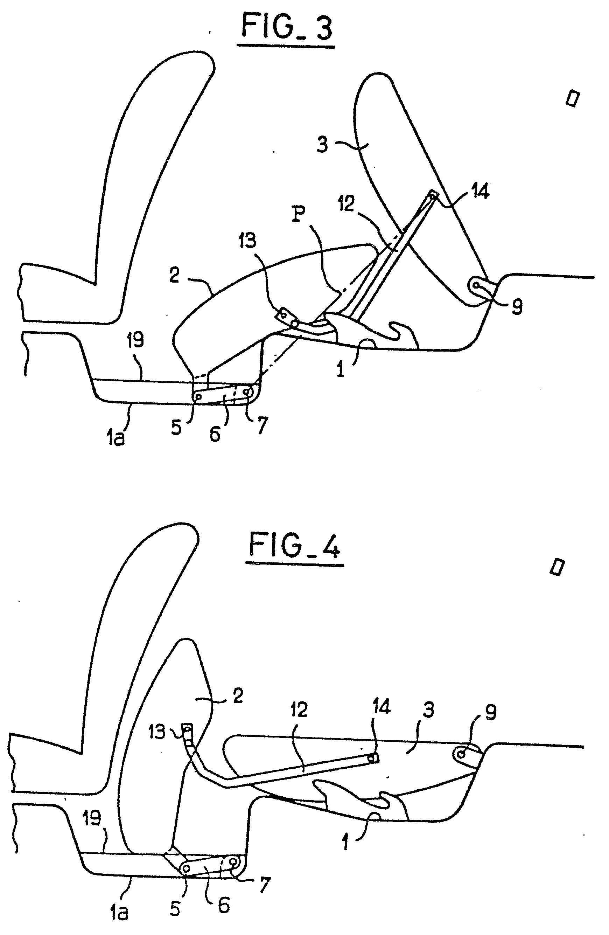

La rampe 15 assure de la sorte la translation d'un point intermédiaire A de la barre de liaison 12 situé au voisinage de son axe d'articulation 13 sur l'assise 2. Pour parfaire la translation de ce point en direction du plan P et pour le faire passer au-dessus dudit plan ainsi que cela est montré à la figure 2, il suffit donc, après avoir déverrouillé le dossier, d'exercer une poussée vers l'avant à sa partie supérieure pour amener l'ensemble dans la position finale représentée sur la figure 4.

Les différentes phases de ce mouvement sont les suivantes:

Dans la première partie du déplacement du dossier 3 vers l'avant, le galet 18 monte la rampe 15 jusqu'à ce que la barre de liaison 12 repousse l'assise qui fait basculer la biellette 6. Au cours de cette phase, l'assise se déplace vers l'avant suivant un mouvement proche de l'horizontale, ce qui dégage parfaitement l'arrière de l'assise de la base du dossier (fig. 2).

Le mouvement étant poursuivi, la biellette 6 continue à s'incliner vers l'avant, ce qui abaisse la partie avant de l'assise tandis que, sa partie arrière, glissant sur une partie ascendante du plancher 1, est repoussée vers le haut: le relevage de l'assise est amorcé.

La rotation de la biellette 6 est stoppée lorsque son extrémité portant l'axe 5 est en butée contre la partie 1ª du plancher 1. Dans cette position (fig. 3), on voit que l'articulation 13 se trouve alors nettement au-dessus du plan joignant les articulations 7 et 14. Le mouvement peut donc se poursuivre, sans risque d'arc-boutement, jusqu'à sa position de la figure 4.

On voit que l'agencement décrit, répond bien à l'objectif que l'on s'était fixé, ceci grâce à la mobilité de l'axe d'articulation 13 de la barre de liaison. En effet, c'est cette mobilité qui permet d'assurer le dégagement de l'assise vers l'avant et de placer l'articulation 13 relativement bas, tout en l'amenant nettement en-dessous de la ligne reliant les articulations 7 et 14 lorsque l'assise est parvenue en butée sur son soubassement.

Dans l'exemple décrit, on a supposé que l'arrêt de la biellette 6 était assuré par appui sur le plancher 1. Le même résultat serait obtenu par appui de l'avant de l'assise 2 sur une nervure longitudinale 19 du plancher 1.

Selon une variante de réalisation simplifiée de l'invention, l'axe d'articulation 13 et l'axe du galet 18 sont confondus.

Cette variante peut être avantageusement retenue dans certaines configurations de planchers de véhicules.

## Revendications

1. Siège transformable pour véhicule automobile comprenant une assise (2) relevable vers le haut autour d'un premier axe transversal (5), un dossier rabattable (3) vers l'avant autour d'un deuxième axe transversal fixe (9), une barre de liaison (12) articulée sur l'assise et sur le dossier pour assurer la simultanéité des mouvements de ces deux élements, une biellette (6) articulée à son extrémité sur le premier axe transversal et reliée par son autre extrémité à son troisième axe (7) transversal fixé au plancher (1) du véhicule, caractérisé par le fait que, dans sa position d'utilisation normale, l'axe d'articulation (13) de la barre de liaison (12) sur l'assise (2) se trouve en-dessous du plan (P) contenant le troisième axe transversal (7) et l'axe d'articulation (14) de la barre de liaison sur le dossier (3) et qu'un moyen de guidage à rampe (15), solidaire du soubassement de l'assise, assure la translation d'un point de la barre de liaison dans le but de relever ledit axe d'articulation (13) de la barre de liaison (12) sur l'assise au-dessus dudit plan au cours du mouvement de rabattement du dossier.

2. Siège selon la revendication 1 caractérisé par le fait que le point de translation A de la barre de liaison est constitué par un galet de roulement (18) mobile le long de la rampe de guidage (15) rapportée sur le plancher (1) du véhicule.

3. Siège selon la revendication 2 caractérisé par le fait que la rampe de guidage (15) est inclinée vers l'arrière de l'assise (2) du siège et qu'elle débouche dans le logement (16) de l'axe du galet de roulement (18) en position d'utilisation de l'assise.

4. Siège selon la revendication 2 ou 3 caractérisé par le fait que l'axe d'articulation (13) de la barre de liaison (12) sur l'assise (2) porte le galet de roulement (18) mobile le long de la rampe de guidage (15).

## Patentansprüche

1. Umwandlungssitz für ein Kraftfahrzeug, mit einem um eine erste Querachse (5) nach oben schwenkbaren Sitzelement (2), mit einer um eine zweite ortsfeste Querachse (9) nach vorn schwenkbaren Rückenlehne (3), mit einer an das Sitzelement und an die Rückenlehne angelenkten Verbindungsstange (12), die die Gleichzeitigkeit der Bewegungen dieser beiden Bauteile gewährleistet, mit einem an einem seiner Enden an die erste Querachse und mit seinem anderen Ende an eine am Boden (1) des Fahrzeugs befestigte ortsfeste dritte Querachse angelenkten Schwingarm (6), dadurch gekennzeichnet, dass in der normalen Gebrauchsstellung die Anlenkachse (13) zwischen der Verbindungsstange (12) und dem Sitzelement (2) unterhalb der die dritte Querachse (7) und die Anlenkachse (14) zwischen der Verbindungsstange und der Rückenlehne (3) enthaltenden Ebene liegt, und dass ein mit der Unterlage des Sitzelementes fest verbundenes Schrägführungsmittel (15) die Verschiebung eines Punktes der Verbindungsstange bewirkt, so dass die genannte Anlenkachse (13) zwischen der Verbindungsstange (12) und dem Sitzelement während des Niederschwenkens der Rückenlehne über die genannte Ebene angehoben wird.

2. Sitz nach Anspruch 1, dadurch gekennzeichnet, dass der Verschiebungspunkt A der Verbindungsstange durch eine längs der am Boden (1) des Fahrzeugs angebrachten Schrägführung (15) bewegliche Rolle (18) gebildet ist.

3. Sitz nach Anspruch 2, dadurch gekennzeichnet, dass die Schrägführung (15) nach dem hinteren Ende des Sitzelementes (E) zu geneigt ist und in eine die Achse der Rolle (18) in Gebrauchsstellung aufnehmende Lagerung (16) mündet.

4. Sitz nach Anspruch 2 oder 3, dadurch gekennzeichnet, dass die Anlenkachse (13) zwischen der Verbindungsstange (12) und dem Sitzelement (2) die längs der Schrägführung (15) bewegliche Rolle (18) trägt.

**Claims**

1. A transformable seat for a motor vehicle, comprising a seat element (2) upwardly pivotable about a first transverse axis (5), a back (3) pivotable forwardly about a second fixed transverse axis (9), a connecting bar (12) hingedly connected to the seat element and the back so as to render the movements of these elements simultaneous, a connecting rod (6) hingedly connected at one of its ends to the first transverse axis and connected at its other end to a third transverse axis (7) fixed to the floor (1) of the vehicle, characterized in that in its normal service position the articulation axis (13) between the connecting bar (12) and the seat element (2) is located below the plane (P) containing the third transverse axis (7) and the articulation axis (14) between the connecting bar end back (3), and in that a guiding ramp means (15) integral with the base of the seat element ensures the translational movement of a point of the connecting bar so as to raise said articulation axis (13) between the connecting bar (12) and the seat element above said plane during the lowering movement of the back.

2. A seat according to claim 1, characterized in that the translation-point A of the connecting bar is constituted by a roll (18) movable along the guiding ramp (15) placed on the floor (1) of the vehicle.

3. A seat according to claim 2, characterized in that the guiding ramp (15) is inclined toward the rear end of the seat element (2), and in that it mouthes into the recess (16) receiving the axis of the roll (18) when the seat element is in its service position.

4. A seat according to claim 2 or 3, characterized in that the articulation axis (13) between the connecting bar (12) and the seat element (2) supports the roll (18) movable along the guiding ramp (15).

## FIG_1

## FIG_2

## FIG_3

## FIG_4

FIG_5

FIG_6

FIG_7

12

15

16

16a

16b

17

18